# EUROPEAN PATENT SPECIFICATION

(11) **EP 1 734 241 B1**
(45) Date of publication and mention of the grant of the patent: **03.09.2008**
(21) Application number: 05013126.7
(22) Date of filing: 17.06.2005
(51) Int. Cl.: F02D 41/14, F01N 11/00

(54) **Method for diagnosing a secondary lambda probe in a catalytic converter**
Methode zur Diagnose einer sekundären Lambdasonde in einem Katalysator
Mèthode de diagnostic d'une sonde lambda secondaire dans un convertisseur catalytique

(43) Date of publication of application: 20.12.2006
(73) Proprietor: Ford Global Technologies, LLC, Dearborn, MI 48126 (US)
(72) Inventor: Karflo, Mats, 44350 Lerum (SE); Gimbergsson, Ulf, 42674 Västra Frölunda (SE)
(74) Representative: Engstrand, Maria Linnéa

(56) References cited:
- EP-A- 1 314 868
- EP-A- 1 437 501
- DE-A1- 4 331 153
- US-A- 5 444 977
- US-A1- 2001 002 550
- US-A1- 2005 076 634

## Description

### Field of the invention

The present invention relates to a method for diagnosing a secondary lambda probe mounted downstream of a first catalyst in a catalytic converter for an engine.

### Background of the invention

In modem vehicles, catalytic converters are used to treat the exhaust gases from the engine.

For controlling the air/fuel mixture in an internal combustion engine, it is known to provide a primary probe upstream of a first catalyst in the catalytic converter, and a secondary probe downstream of said first catalyst. The probes measure the air to fuel ratio in their surroundings, and are often referred to as "lambda" probes. Likewise, an air to fuel ratio is referred to as a "lambda". As usual in the art, lambda =1.0 indicates stoichiometric combustion conditions, where 14.2 parts air corresponds to one part of fuel. Lambda being >1 indicates that the air/fuel mixture includes an excess amount of air, which is referred to as a "lean" mixture. Lambda being <1 indicates that the air/fuel mixture includes an excess amount of fuel, which is referred to as a "rich" mixture.

The primary lambda probe is usually used for controlling the lambda of the air/fuel mixture entering the first catalyst. The secondary lambda probe indicates the lambda downstream of the first catalyst, and may be used to indicate that the desired lambda upstream of the first catalyst should be varied for optimal function of the catalytic converter.

During normal engine operation, the air/fuel mixture that reaches the catalytic converter will vary about lambda=1. To ensure that the exhaust gases are convertible by the catalysts, the variation about lambda =1 may be regulated so as to vary in a controlled manner. There are several known techniques for performing this regulation. In accordance with one prior art technique, the air/fuel mixture from the engine is varied from "rich" to "lean" and vice versa periodically with a fixed time period set. In accordance with another prior art technique, the response from the secondary lambda probe is used for deciding when the air/fuel mixture from the engine should be altered from "rich" to "lean" or vice versa.

Certain types of lambda probes may age or deteriorate such that their response to a change in surrounding lambda is altered. Two types of alterations may be involved. Firstly, there may be response delay, which indicates that the time needed for the probe to react to changes in surrounding lambda is increased. Secondly, the dynamic response of the probe may be altered, such that the probe may not reflect variations in surrounding lambda properly. Thus, the probe may have a slower dynamic response than a normal probe. The combined impact of the two types of faults may be referred to as "a slow response" problem, which may occur both for primary and for secondary lambda probes.

The function of catalytic converters is often evaluated based on the capacity of storing oxygen. In the evaluation of the oxygen storage capacity of the catalytic converter, the lambda probes are often used. Accordingly, a faulty lambda probe may lead to an incorrect evaluation of the catalytic converter. When well-functioning catalytic converters are classed as faulty, and thus replaced, this represents a considerable waste of material and is furthermore expensive, since a new catalytic converter must be provided. When instead a faulty catalytic converter is classified as correct, this might lead to insufficient exhaust gas conversion which is problematic for the environment.

Thus, it is desirable to perform diagnosis of the function of the lambda probes per se,

US 6 131 446 relates to a method for diagnosing an exhaust-gas probe mounted downstream of a catalytic converter. The output signal of the exhaust-gas probe is monitored as the output signal changes in response to changes of the concentration of at least one of the components of the exhaust gas. The rate of the change is applied as a criterion as to the state of deterioration of the exhaust-gas probe.

US 6 287 453 describes a system wherein periodic forced stimulations are asserted on setpoint values for a lambda control and a system response of a lambda control loop is simulated by a model that includes a sensor delay time as the model parameter. Amplitude gains of the model and the system are compared with each other and adapted according to the result of the comparison of the model parameters. If the adaptation value lies over a threshold, a lambda probe is classified as defective.

Slow response faults of a secondary lambda probe, i. e. a lambda probe being arranged downstream of a catalyst, is particularly troublesome since the delay in response from the probe might lead to the catalytic converter as a whole being interpreted as having a greater oxygen storing capacity than it actually has. Thus, this type of error might lead to inadequate catalytic converters being erroneously classified as well-functioning.

There are certain types of lambda probes on the market today which generally do not suffer from ageing so as to induce a slow response problem. However, it is possible to tamper a secondary lambda probe so as to intentionally slow down the response time, in order to ensure that the catalytic converter passes regular quality tests. Tampering of a probe may result in an increased response delay and/or slow dynamic response as described above. Accordingly, even if high quality probes that are resistant to ageing problems are selected for the catalyst systems, there is a risk that probes that do not function properly will be in use.

Accordingly, it is desirable to provide a method for diagnosing of a secondary lambda probe.

### Summary of the invention

In view of the above, it is an object of the present invention to provide a method for slow response diagnosing of a secondary lambda probe. The method should preferably be suitable for diagnosing binary, i.e. "non-linear" lambda probes, which is a type of probe that is often used as secondary probes.

This object is achieved by a method for slow response diagnosing a secondary lambda probe mounted downstream of a first catalyst in a catalytic converter for a vehicle, wherein, when the first catalyst is essentially oxidised or alternatively essentially deoxidised,
- controlling the lambda (air to fuel ratio) upstream of the first catalyst so as to vary the lambda periodically at least partly in the nominal dynamic range of the secondary lambda probe,
- measuring the response of the secondary lambda probe to said periodical variation,
- determining a condition measure of the secondary lambda probe using said response.

The first catalyst being essentially oxidised or alternatively deoxidised when performing the diagnosis results in the first catalyst being unable to compensate for at least some of the variations in lambda. Hence, the periodically varying lambda upstream of the first catalyst will ideally result in an at least partly varying lambda downstream of the first catalyst, at the secondary probe.

The periodical variation of lambda is selected such that lambda varies at least partly in the nominal dynamic range of the secondary lambda probe.

With a "dynamic range" is meant a range such that, if the lambda is varied in the range, the response from the lambda probe varies. In contrast, lambda probes may have a static range where the response from the lambda probe is essentially constant, although the lambda is varied in the range. With "nominal dynamic range" is meant the expected dynamic range of a probe, if performing its function as intended and not being tampered with. The "nominal dynamic range" is thus a range determined by the probe as manufactured.

Accordingly, the response of a well-functioning secondary lambda probe will reflect the variations of lambda being performed at least partly in the nominal dynamic range of the probe. However, a faulty secondary lambda probe having a slow response time will not be able to reflect the variations of the surrounding lambda as well as a well-functioning probe. Thus, by analysing the response from the secondary lambda probe it is possible to determine a condition measure of the probe, indicating the state thereof.

Suitably, the lambda probe may be a binary lambda probe, and the lambda is periodically varied at least partly in the nominal dynamic region of the binary lambda probe. A binary lambda probe is a probe having a first static range, wherein response of the lambda probe is generally set "high", a second static range, wherein the response of the lambda probe is generally set "low", and an intermediary dynamic range, where the response of the probe varies from "high" to "low" depending on the surrounding lambda. The intermediary dynamic range is set in the region about lambda =1, whereas a "rich" lambda <1 generally corresponds to a "high" response, and a "lean" lambda >1 generally corresponds to a "low" response from the binary probe. Thus, although binary probes are sometimes referred to as "non-linear" probes, they may exhibit a generally linear behaviour in the dynamic range.

In the first mentioned alternative of the method, where the first catalyst is essentially deoxidised, the periodic variation of the lambda is preferably defined such that, for a main portion of the variation, the lambda is 5 1. In this situation, the catalyst is essentially void of oxygen. When the lambda is varied in a region where lambda is ≤ 1, e.g. on the "rich" side, the catalyst is unable to compensate for the rich lambda by adding oxygen to the mixture. Accordingly, the periodical variation in lambda upstream of the catalyst results in an at least partly periodically varied lambda downstream of the catalyst, at the secondary probe. Thus, a varying lambda surrounding the secondary probe is created and may be used for determining a condition measure thereof as mentioned above.

The periodic variation of the lambda may be such that lambda ≤ 1 for at least 90% of the variation duration, preferably 90-99% of the variation duration.

Advantageously, the lambda is periodically varied in the range 0.85 to 1.1, preferably in the range 0.9 to 1.01, most preferred in the range 0.94 to 1.005. The above-mentioned ranges are particularly suitable when a binary lambda probe is diagnosed.

In another alternative, the first catalyst is essentially oxidised, and the periodic variation of the lambda is defined such that, for a main portion of the variation, the lambda is ≥ 1. In this situation, the catalyst is essentially full of oxygen. When the lambda is varied in a region where lambda is ≥ 1, e.g. on the "lean" side, the oxidised catalyst is unable to compensate for the lean lambda by removing oxygen from the mixture. Accordingly, the periodical variation in lambda upstream of the catalyst results in an at least partly periodically varied lambda downstream of the catalyst, at the secondary probe. Thus, this is a second method of creating a varying lambda surrounding the secondary probe which may be used for determining a condition measure thereof as mentioned above.

In this case, the periodic variation of the lambda could be such that lambda ≥ 1 at least 90% of the variation duration, preferably 90-99% of the variation duration. Advantageously, the lambda may be periodically varied in the range 0.9 to 1.15, preferably in the range 0.99 to 1.1, most preferred in the range 0.995 to 1.06.

Regardless of whether the periodic variation of the lambda is created on the "rich" or the "lean" side, the lambda may preferably be varied essentially following a sine curve. A sine curve has the advantage of creating a response of the probe which is relatively easy to analyse, and is relatively stable in view of different fuel injector reactions and flow properties. Nevertheless, although less preferred, other curve shapes are useful, as long as they provide a response which is analyzable.

Advantageously, the lambda may vary periodically with a frequency in the range 0.1 - 1 Hz, preferably in the range 0.25 - 0.5 Hz, most preferably about 0.33 Hz. As such, a number of periods sufficient for analyse may be executed during a relatively brief period of time. This makes it easier to find an occasion to perform the diagnosis of the secondary lambda probe.

Preferably, the periodical variation of lambda is performed during a duration time being in the range 3 to 7 s, preferably 6 to 7 s. It is an advantage with the proposed method that it may be performed within relatively brief duration times. Accordingly, the amount of exhaust gases that needs to be taken care of during the diagnosis interval, when the catalytic converter does not operate normally, is limited.

Advantageously, the periodical variation of lambda is performed when the engine is idling. Alternatively, the periodical variation of lambda may be performed under normal operating conditions of the engine.

Preferably, the method may include a verification step performed before periodically varying the lambda, in which it is verified that the first catalyst, situated upstream of the secondary lambda probe is essentially oxidised or alternatively deoxidised. Accordingly, it is ensured in which state (oxidised/deoxidised) the first catalyst is before selecting whether the periodical variation of lambda should preferably be made mainly on the "rich" side or on the "lean" side as described above. For determining the oxidation state of the first catalyst before start of the periodical variation of lambda, the response from the secondary lambda probe may suitably be used. Other methods are however possible.

Advantageously, a primary lambda probe is arranged upstream of the first catalyst. Such a primary lambda probe is usually selected to be a linear (or "continuous") probe.

Preferably, the method may include analysing the response from the primary lambda probe so as to ascertain that the lambda varies periodically upstream of the first catalyst when performing the diagnosis.

The condition measure being determined based on the response from the secondary lambda probe may advantageously be indicative of the voltage variations of the response caused by the periodical variation of the target lambda.

For the secondary lambda probe to be classed as "well-functioning"', it is not necessary that it reflects the periodical variations of the lambda perfectly. The filter effect of the first catalyst and the nominal dynamic range of the secondary lambda probe will normally result in the response of the lambda probe being a complex function. However, the extent to which the periodical variation of the lambda may be traced in the variation of the response may be used for indicating the state of the secondary lambda probe.

For a correct diagnosis of the secondary probe, the method may advantageously include repeating the diagnosis on a number of occasions so as determine a number of condition measures, forming a mean of said condition measures, and determining the state of the binary lambda probe based on said mean of condition measures.

Advantageously, the state of the binary lambda probe is determined by comparing said mean of condition measures to a threshold value. Such a threshold value may be determined e.g. by performing a number of measurements on well-functioning as well as faulty probes, for a certain type of catalytic converter. From these measurements, a suitable threshold value may be determined.

Advantageously, a second catalyst may be mounted downstream of the first catalyst, the oxidized/deoxidized state thereof being controllable so as to enable conversion of exhaust gases during the diagnosis. In order to enable conversion of exhaust gases in the second catalyst during the diagnosis, it is preferred that the state of the second catalyst is adjusted as regards oxygen level and the corresponding conversion ability. The adjustment may use the lambda measured upstream of the second catalyst as input. Advantageously, the oxidised/deoxidised state of the second catalyst is selected depending on which side (rich or lean) the diagnosis is performed.

In a second aspect of the invention there is provided an arrangement for slow response diagnosing a secondary lambda probe mounted downstream of a first catalyst in a catalytic converter for a vehicle, having means for, when the first catalyst is essentially oxidised or alternatively essentially deoxidised, controlling the lambda (air to fuel ratio) upstream of the first catalyst so as to vary the lambda periodically at least partly in the nominal dynamic range of the secondary lambda probe,
means for measuring the response of the secondary lambda probe to said periodical variation, and
means for determining a condition measure of the secondary lambda probe using said response.

The arrangement according to the invention may optionally additionally be provided with suitable means for performing the various functions of the method steps, alone or in combination, as defined in the dependent claims 2 to 19.

The alternatives and advantages described above in relation to the method are likewise applicable to the arrangement.

### Brief description of the drawings

In the following, preferred embodiments of the invention will be described as non-limiting examples only and with reference to the appended drawings
wherein:
Fig. 1 depicts schematically a catalytic converter system for an engine.
Fig. 2a depicts schematically the response curve of a binary type lambda probe.
Fig. 2b depicts schematically the response curve of a linear type lambda probe.
Fig. 3 illustrates schematically the response function of a probe as seen with reference to time.
Fig. 4 illustrates schematically the response function of a well-functioning and of a faulty probe as seen with reference to frequency.
Fig. 5a Illustrates schematically a possible response of a well-functioning lambda probe.
Fig. 5b illustrates schematically a possible response of a faulty lambda probe.
Fig. 6 illustrates schematically the determination of a threshold value from the response of the diagnosed lambda probe.
Fig. 7 illustrates schematically the periodical variation of lambda according to a first embodiment of the invention.
Fig, 8 is a flow chart of an embodiment of a method according to the invention.

### Detailed description of preferred embodiments of the invention

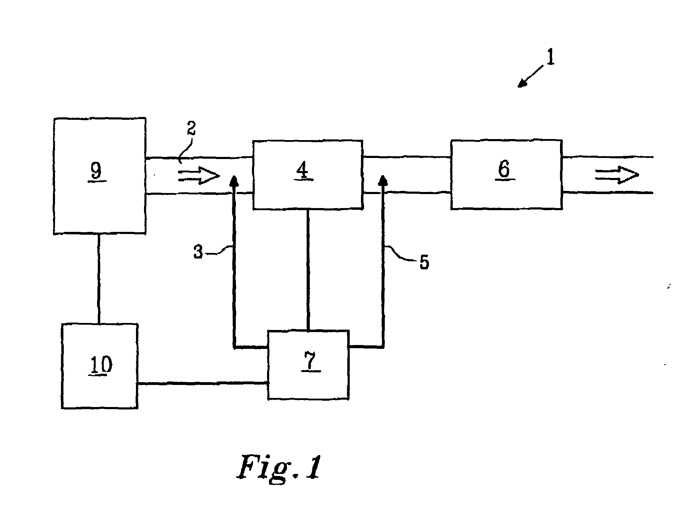

In Fig. 1, a catalytic converter system 1 for an engine is schematically illustrated. An engine, generally denoted by 9, produces exhaust gases that are brought via an exhaust pipe 2 to the catalytic converter system 1. The arrows in Fig. 1 illustrates the direction in which the exhaust gases travel, and the terms "upstream" and "downstream" are used with reference to this direction.

In the illustrated embodiment, the catalytic converter system 1 comprises a first catalyst 4 and a second catalyst 6. During normal operation of the engine, the major part of the conversion of exhaust gases takes place in the first catalyst 4. The second catalyst 6, which is located downstream of the first catalyst 4, however provides extra security and will convert any exhaust gases not converted by the first catalyst 4.

In the illustrated embodiment, a first lambda (air to fuel ratio) probe 3 is arranged upstream of the first catalyst 4 for measurement of the lambda to enter the first catalyst 4. In this type of catalytic converter system, the first or primary lambda probe 3 is normally a linear type probe.

A secondary lambda probe 5 is arranged downstream of the first catalyst 4, in this case upstream of the second catalyst 6. The primary lambda probe 3 and the secondary lambda probe 5 are coupled to a control unit 7 for control of the fuel supply in order to achieve an air/fuel ratio desired for appropriate function of the catalytic converter.

During normal operation of the engine, the air/fuel mixture that reaches the exhaust pipe 2 from the engine 9 will be either "rich", i.e. having lambda <1, or "lean", i.e. having lambda >1. In order to enable the first catalyst 4 to satisfactory convert the exhaust gases, it is necessary that the mixture varies from "lean" to "rich" and back again, so as to alternately fill and drain the first catalyst 4 of oxygen. This function may be controlled as is known in the art by using the responses of the primary lambda probe 3 and the secondary lambda probe 5 to control the mixture from the engine 9. To achieve satisfactory conversion, the air/fuel mixture upstream of the first catalyst (at the primary lambda probe 3) is controlled to "rich" or "lean" in an opposite relationship to the "rich/lean" response of the secondary lambda probe 5, being positioned downstream of the first catalyst 4. Thus, the lambda upstream of the first catalyst 4 will periodically shift between a lambda less than 1 and a lambda greater than 1 during normal operation. In the illustrated embodiment, this control is achieved by the control unit 7 of the lambda probes being connected to an engine control unit 10 of the engine 9.

The primary and secondary lambda probe 3, 5 may be essentially linear probes, or binary ("non-linear") probes. It is preferred that the primary lambda probe 3 is a linear probe, whereas the secondary lambda probe 5 is a binary lambda probe.

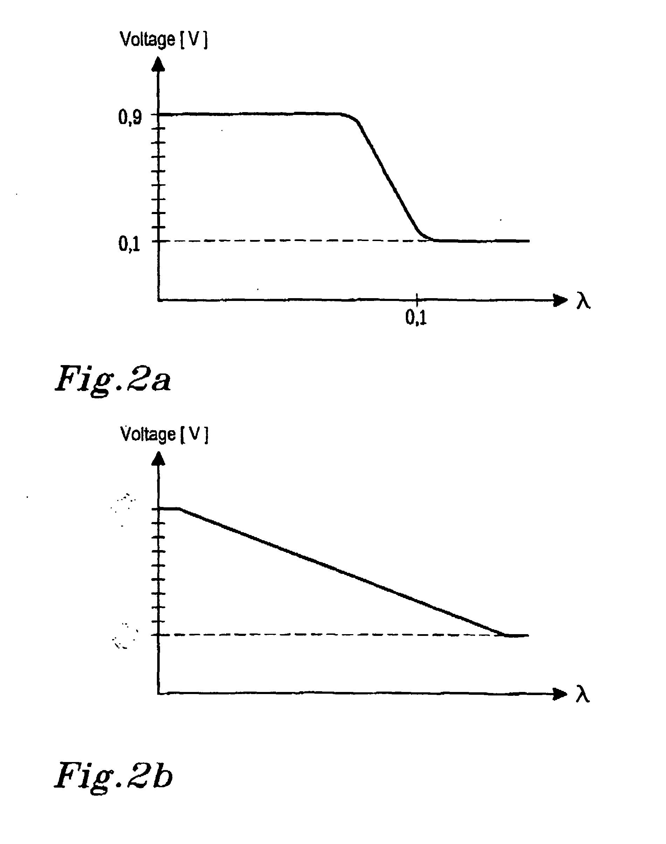

A typical characteristic of a well-functioning binary lambda probe is exemplified in Fig. 2a. The probe has a first static region, where the response voltage of the probe is constant "high" - in this case about 0.9 V. Further, the probe has a second static region, where the response voltage of the probe is constant "low" - in this case about 0.1 V. In an intermediary region, including lambda = 1, the probe has a dynamic region where the response voltage decreases from "high" to "low" as lambda increases. In the illustrated example, lambda=1 corresponds to a response of 0.625 V. As mentioned previously, in the dynamic region, a binary lambda probe may at least partly have a linear characteristic.

In contrast, in Fig.2b a typical characteristic of a "continuous" or "linear" lambda probe is illustrated, The characteristic of the linear lambda probe includes a wide dynamic region where the response voltage alters with altering lambda, Ideally, in the dynamic region, the response of the probe is generally linear to lambda, as Illustrated in Fig. 2b.

The method as proposed herein is particularly advantageous for use when the secondary lambda probe is a binary lambda probe. However, it may also be used for continuous lambda probes.

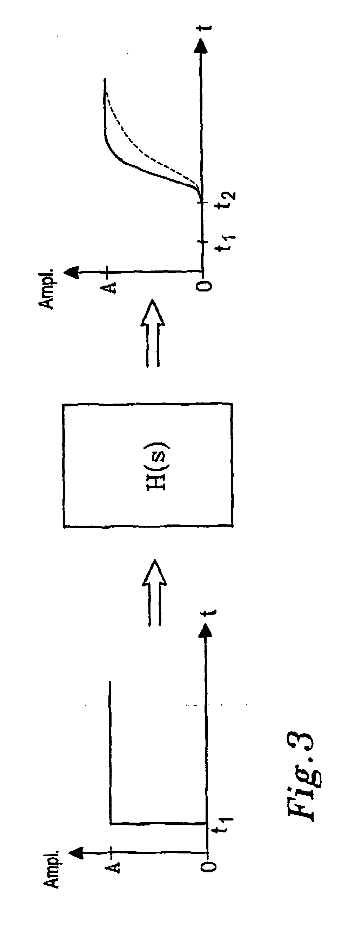

In Fig. 3, the response delay and dynamic response of a lambda probe is illustrated as seen with reference to time. Considering an input pulse starting at time t1 and having an amplitude A as shown to the left in Fig. 3, the lambda probe will essentially function as a filter having a response function H(s). The resulting response from the lambda probe will be a curve as generally illustrated to the right in Fig. 3. The response curve starts at a time t2 being greater than the start time of the input pulse t1. The difference between t2 and t1 may be referred to as the response delay of the probe. Well-functioning probes will have a certain response delay, although ageing and/or tampering may increase this delay. Further, the response curve needs a certain period of time to reach the amplitude A, which illustrates the dynamic response of the probe. In Fig. 3, the continuous line shows the behaviour of a well-functioning probe. The broken line indicates the behaviour of a faulty probe, having a slow dynamic response.

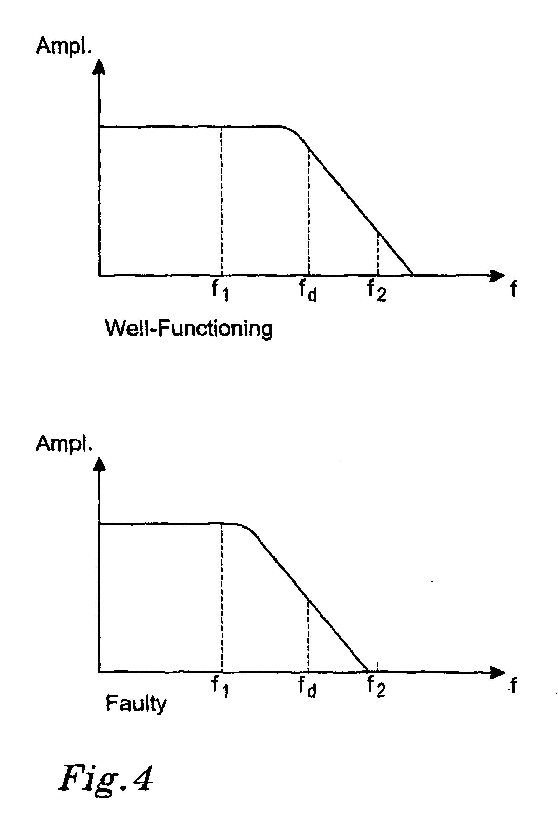

In Fig. 4, the difference between a well-functioning and a faulty probe is illustrated with reference to their ability of responding to input signals having different frequency. The behaviour of a well-functioning probe is illustrated to the left in Fig. 4. The well functioning probe have a certain frequency range where the probe is capable of following the alterations in input signal rather well, As the frequency increases, the capacity of the probe declines. A faulty probe, as illustrated to the right in Fig. 4, has a narrower band in which the probe may follow alterations in input signal, whereafter the capacity declines.

Thus, considering a relatively low frequency f1, the well-functioning probe and the faulty probe as exemplified in Fig. 4 will both be able to trace the signal, i.e. to give a satisfactory response. However, for a relatively high frequency f2, the well-functioning probe will produce a reduced response, whereas the faulty probe will not be able to produce any useful response at all.

According to the proposed method for diagnosing a lambda probe, the lambda surrounding the probe should be varied periodically at least partly in the dynamic range of the probe. To facilitate analysis of the response from the probe, it is preferred that the frequency for the periodical variation of lambda is selected such that the difference between a well-functioning probe and a faulty probe is clear. In Fig. 4, a frequency for diagnosis is exemplified as fd. In this case fd is selected in the frequency region where the capacity of the well-functioning probe to trace the input signal starts declining. For the faulty probe, the same frequency fd is situated in the region where the capacity to trace the input signal is clearly reduced, though still enabling the output of a response to be analysed.

In view of the above it is understood that a suitable frequency for the periodical variation of lambda may be selected by studying the amplitude to frequency behaviour of a number of well-functioning and faulty probes.

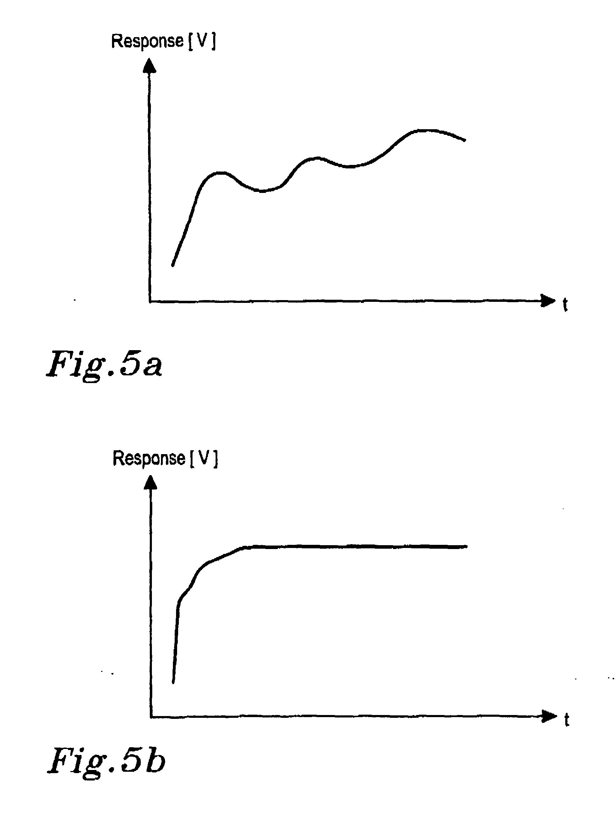

In Fig. 5a, the time response of a well functioning probe to a sinusoidal periodical variation of lambda with a frequency as exemplified in Fig. 4 is illustrated. It may be gleaned that the amplitude of the response signal does not follow the sinusoidal variation of the input signal perfectly, Nevertheless, the variation may is clearly discernible.

In Fig. 5b, the time response of a faulty probe to a sinusoidal periodical variation of lambda with a frequency as exemplified in Fig. 4 is illustrated. Here, it may be gleaned that the periodical variation of lambda is hardly discernible in the response signal.

For evaluating the response of a probe during diagnosis, a threshold value may be used. In order to set a suitable threshold value, it is preferred to study a number of well-functioning and faulty probes.

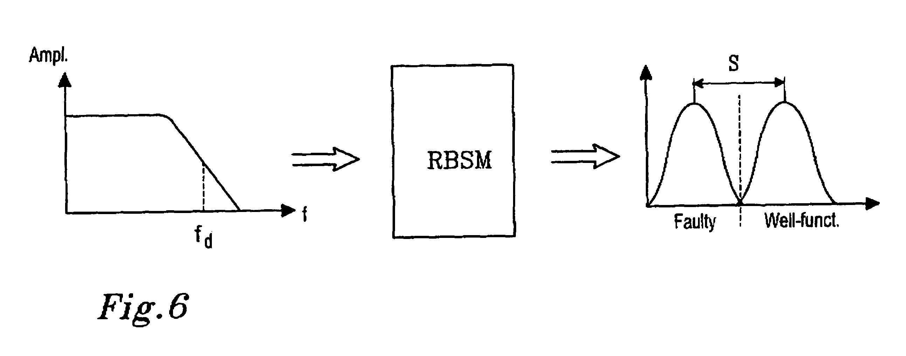

As illustrated in Fig. 6, the response from the probe may be evaluated in a Rear Binary Sensor Monitor (RBSM) and analysed. When studying a number of probes, the result from the RBSM will form two normal distributions, one distribution corresponding to faulty probes (to the left in Fig. 6) and one distribution corresponding to well-functioning probes (to the right in Fig. 6). The separation s between the distributions is depending on the number of samples used for the evaluation. However, a threshold value may be determined in between the variations as indicated with the broken line in Fig. 6.

It is understood that several mathematical methods are available for evaluating the response from the probes to produce the normal distributions, as is known to a person skilled in the art.

Further, although in the Figures, the periodical variation is illustrated as including one frequency only, it may be envisaged to use periodical variations including several frequencies.

According to the proposed method for diagnosing a secondary lambda probe mounted downstream of a first catalyst in a catalytic converter for a vehicle, it may advantageously first be determined whether the first catalyst is essentially oxidised or alternatively essentially deoxidised. This procedure may be performed by studying the response of the secondary lambda probe during normal operation of the catalytic converter. To this end, the response of the secondary lambda probe may be studied in combination with other factors, such as the primary lambda probe. Generally, if the secondary lambda probe is a binary probe, a response shifting to "high" in combination with the primary lambda probe <1 during a period of time, e.g. a few seconds, before the shift, corresponds to the first catalyst being essentially deoxidised, and a response shifting to "low" in combination with the primary lambda probe >1. during a period of time before the shift corresponds to the first catalyst being essentially oxidised. Using a binary probe as exemplified in Fig. 2, a functional limitation might be set such that a response < 0.2 V corresponds to a generally oxidised first catalyst, and a response > 0.7 V corresponds to a generally deoxidised first catalyst.

Alternatively, it is possible to actively set the oxidation state of the first catalyst 4 by varying the lambda upstream of the first catalyst 4 on the "rich" or the "lean" side, suitably from 0.9 to 0.96 or alternatively 1.04 to 1,10. However, it is believed that active setting of the oxidation state will normally not be necessary.

Having this determined the state of the first catalyst, the lambda (air to fuel ratio) upstream of the first catalyst should be controlled so as to vary the lambda periodically at least partly in the nominal dynamic range of the secondary lambda probe. Again, in the example illustrated in Fig. 2, the dynamic range of the binary lambda probe includes at least lambda from about 0.97 to 1.02. The dynamic range as illustrated in Fig. 2 is characteristic for a useful type of binary probes.

The control of the lambda in the region of the secondary lambda probe 5 may be made in various ways. Preferably, the fluid injection to the engine 9 may be periodically varied so as to create the desired variation in lambda. Alternatively, air could be introduced to the fuel/air mixture in the region of the secondary lambda probe via a secondary air inlet.

Preferably, if the first catalyst 4 is essentially deoxidised, the periodic variation of the lambda is defined such that, for a main portion of the variation, the lambda is ≤ 1. Thus, the main portion of the variation occurs on the "rich" side. Since the catalyst 4 is deoxidised, a "rich" mixture coming from the engine 9 via the exhaust pipe 2 will pass through the first catalyst 4 while remaining a "rich" mixture. This is because the deoxidised first catalyst 4 is unable to compensate for the "rich" mixture by addition of oxygen thereto. Accordingly, the variation occurring mainly on the "rich" side will also reach the secondary probe 5 located downstream of the first catalyst 4.

With "main portion" of the periodical variation is generally meant that more than 75% of the lambda if plotted in a lambda versus time diagram will be present on either side of lambda=1. Preferably, more than 90% of the lambda varies on the selected "rich" or "lean" side. In a preferred embodiment of the invention, 90 to 99% of the lambda is present on the selected side of lambda=1. Thus, a great deal of the periodical variation will be useful for assessment of the function of the secondary lambda probe.

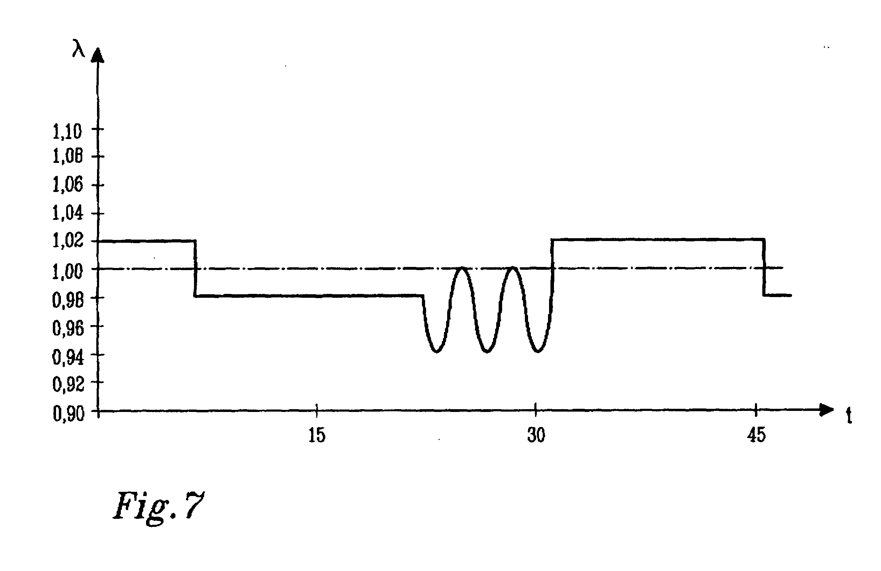

In Fig. 7, an exemplary embodiment of a periodical variation of lambda Is depicted. In this case, the lambda is periodically varied according to a sine curve. As may be gleaned from Fig. 7, in this case, lambda is varied periodically from 0.94 to 1.005. Thus, lambda enters and exits the dynamic region of the binary lambda probe, while generally remaining on the "rich" side of the lambda diagram. In Fig. 7, two full periods are performed for the diagnostic. Thereafter, the catalytic converter starts its normal function, during which lambda alters stepwise from a minimum value of 0.98 to a maximum value of 1.02.

The frequency of the periodical variation of lambda in the illustrated embodiment is 0.33 Hz. Generally, the frequency should be selected so as to be in a range suitable to indicate failures in the probes due to slow response times. In contrast, the stepwise behaviour of lambda during normal operation of the catalyst has in the illustrated embodiment a frequency of about 0.067 Hz.

It is preferred that the diagnostic takes place on the "rich" side of the lambda spectrum, as illustrated in Fig, 7. This is because the state of the second catalyst is normally close to oxidised when the engine idles, e.g. after start-up thereof after a shorter fuel cut during previous deceleration.

However, it is possible to perform the diagnostic also on the "lean" side of the lambda. In this case,lambda may be sinusoidally varied from 0.995 to 1.06.

The response of the secondary lambda probe to said periodical variation is measured and evaluated as mentioned above.

Turning again to Fig. 5a which illustrates a typical response of a well-functioning binary lambda probe to a variation as suggested in e.g. 7. As may be gleaned from Fig. 5a" the variation of lambda results in a variation of the response voltage of the probe. However, the response does not normally vary exactly as did the lambda - in the example it is illustrated how the response is somewhat smoother than the original periodical variation of lambda. This is because the probe per se will act as a filter e.g. a low pass filter of the lambda signal, even when well-functioning. It should be understood that even a well-functioning lambda probe has some response time, e.g. about 0.2-0.4 s for a binary probe as described above.

Fig. 5b illustrates a typical response of a faulty binary lambda probe. The response is in this case a rather smooth curve, where the variations are hardly or not discernible at all.

As mentioned above, and illustrated in Fig. 6, it is possible to determine a condition measure indicating how well the lambda probe is functioning by evaluating different well-functioning and faulty lambda probes. For example, the variation of the response may be evaluated to this end.

To perform a reliable diagnosis, it is preferred that the diagnosis process is run on several occasions, and that a mean is formed by the condition measures obtained on each occasion. When the mean exceeds a predetermined threshold value, a warning may be issued, e.g. by lighting of a malfunction indication lamp indicating a faulty secondary lambda probe.

It is most preferred that the diagnosis is run when the engine is idling. Preferably, several diagnoses may be run during a drive when the engine is idling on several occasions.

Further, it is possible to perform the diagnosis when the engine is not idling. However, the diagnosis should preferably be run when the engine runs in a low flow condition, such as during low speed and smooth driving. Accordingly, the exhaust gases created during the diagnosis may be readily taken care of.

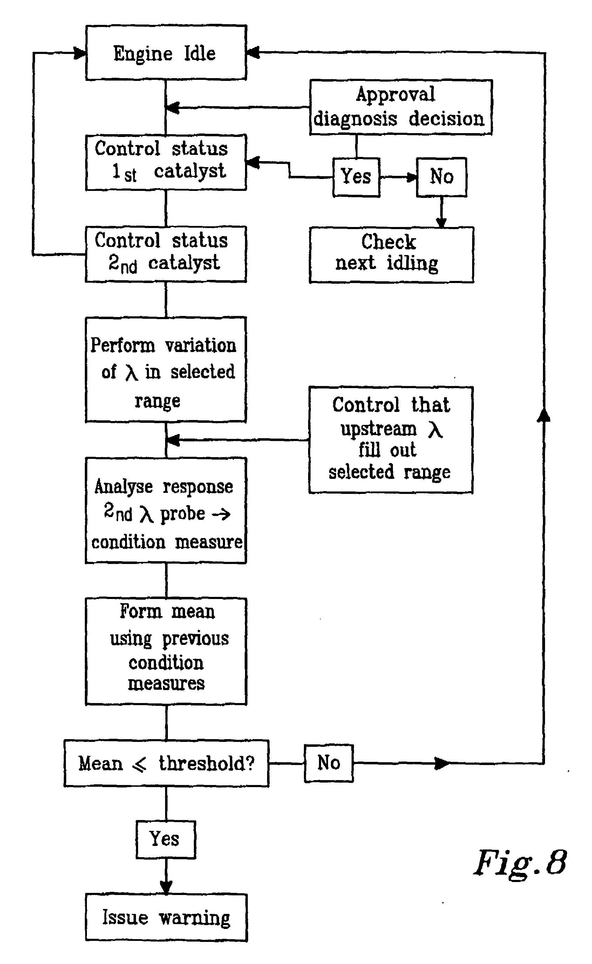

Fig. 8 is a flow chart schematically illustrating an embodiment of a method according to the invention as described above.

When the engine is idling, it is first decided whether to run a diagnosis or not. If a diagnosis is to be run, the oxidised/deoxidised status of the first and second catalyst is checked. Thereafter, the periodical variation in lambda upstream of the first catalyst 4 is performed. The periodical variation is controlled for accuracy upstream of the first catalyst 4, e.g. using a primary lambda probe. The periodical variation of lambda results in a response signal from the secondary lambda probe, which is analysed to provide a condition measure of the probe.

Thereafter, a mean is formed using a number of previous condition measures together with the recently achieved measure. Advantageously, two to four condition measures achieved from different diagnosing sessions could be used to form the mean measure. The mean measure is compared to a threshold value. If the mean is less than the threshold, a warning is issued that the secondary probe is defect. If the mean is greater than the threshold, the diagnosis may be repeated at a later moment when the engine is idling again.

An advantage with the proposed method is that, since it is possible to perform the diagnosis when the engine is idling, the diagnosis may be made as end of line diagnosis during production of the vehicle. Another advantage is that diagnostic data gathered during normal use of a vehicle may be stored so as to obtain data useful for evaluation of e.g. ageing of the lambda probes or to indicate tampering thereof.

Another advantage with the proposed method is that it enables diagnosis without risk of unconverted exhaust gases being discharged from the catalytic converter. During normal operating conditions of the engine, the first catalyst 4 converts essentially all of the exhaust gases from the engine 9, and the second catalyst 6 functions as a back-up in case the first catalyst 4 should not be able to convert all of the gases. When performing a diagnosis according to the invention, the first catalyst 4 should not convert all of the exhaust gases, since instead the periodical variation of lambda is intended to reach the secondary probe 5 for evaluation thereof. Instead, the second catalyst 6 may be used to convert the exhaust gases created during the diagnosis of the lambda probe.

The ability of the second catalyst 6 to convert gases depends upon its oxygen level and its previous oxygen exchange degree "oxygen exercise". The oxygen level may be actively set after each longer fuel cut or fuel enrichment. Alternatively, the oxygen level of the second catalyst 6 may be controlled to move up or down in accordance with the response from the secondary lambda probe 5 or due to transients causing rich or lean spikes into second catalyst 6, which are likewise sensed by the secondary lambda probe 5. However, it is believed that active setting of the oxygen level in the second catalyst 6 will normally not be necessary for performing a diagnosis according to the invention.

The frequencies proposed above for the periodical variation of lambda enables the diagnosis to be performed in a relatively brief diagnosis duration time. Accordingly, even if during the diagnosis the lambda is generally varying on one side only of the "rich/lean" spectrum, the oxygen level in the second catalyst will enable full conversion of the exhaust gases created during the diagnosis, if necessary using active control of the oxygen level. Hence, the diagnosis method as proposed herein may be performed without increased discharge of non-converted exhaust gases.

Several alternatives and embodiments are possible within the frame of the invention. For example, different types of probes giving different response voltages than those described may be envisaged. Further, additional catalysts may be arranged upstream or downstream of the lambda probe to be diagnosed. The method and arrangement as proposed are particularly suitable for use with a catalytic converter system in a vehicle.

## Claims

1. Method for diagnosing a secondary lambda probe (5) mounted downstream of a first catalyst (4) in a catalytic converter (1) for an engine,
**characterised by,**
when the first catalyst (4) is essentially oxidised or alternatively essentially deoxidised,
- controlling the lambda (air to fuel ratio) upstream of the first catalyst (4) so as to vary the lambda in accordance with a selected periodical variation, at least partly in a nominal dynamic range of the secondary lambda probe (5),
- measuring the response of the secondary lambda probe (5) to said selected periodical variation,
- determining a condition measure of the secondary lambda probe (5) using said response.

2. Method according to claim 1, wherein the secondary lambda probe (5) is a binary lambda probe, and the lambda is varied in accordance with a selected periodical variation, at least partly In the nominal dynamic region of the binary lambda probe.

3. Method according to claim 1 or 2, wherein, when the first catalyst (4) is essentially deoxidised, the selected periodical variation of the lambda is defined such that, for a main portion of the variation, the lambda is ≤ 1.

4. Method according to claim 3, wherein the lambda is varied in accordance with a selected periodical variation in the range 0.85 to 1.1, preferably In the range 0.9 to 1.01, most preferably in the range 0.94 to 1.005.

5. Method according to claim 1 or 2, wherein, when the first catalyst (4) is essentially oxidised, the selected periodical variation of the lambda is defined such that, for a main portion of the variation duration, the lambda is ≥ 1.

6. Method according to claim 5, wherein the lambda is varied in accordance with a selected periodical variation in the range 0.9 to 1.15, preferably in the range 0.99 to 1.1, most preferably in the range 0.995 to 1.06.

7. Method according to any one of the previous claims, wherein the lambda is varied in accordance with a selected periodical variation essentially being a sine curve.

8. Method according to any one of the previous claims, wherein the lambda is varied in accordance with a selected periodical variation having a frequency in the range 0.1 - 1 Hz preferably in the range 0.25 - 0.5 Hz, most preferably about 0.33 Hz.

9. Method according to any one of the previous claims, wherein the selected periodical variation of lambda is performed during a duration time being in the range 3 to 7 s, preferably 6-7 s.

10. Method according to any one of the previous claims, wherein the selected periodical variation of lambda is performed when the engine Is idling.

11. Method according to any one of the previous claims, wherein the selected periodical variation of lambda is performed under normal operating conditions of the engine.

12. Method according to any one of the previous claims, including a verification step performed before periodically varying the lambda, in which it is verified that the first catalyst (4), situated upstream of the secondary lambda probe (5), is essentially oxidised or deoxidied.

13. Method according to claim 12, wherein the verification of the oxidised or deoxidised state of the first catalyst (4) is performed using the response from the secondary lambda probe (5) before start of the periodical variation of lambda.

14. Method according to any one of the previous claims, wherein a primary lambda probe (3) is arranged upstream of the first catalyst.

15. Method according to claim 14 including a control step comprising analysing the response from the primary lambda probe (3) so as to ascertain that the lambda varies periodically upstream of the first catalyst (4).

16. Method according to any one of the previous claims, wherein the condition measure is indicative of the voltage variations of the response of the binary lambda probe (5) to the selected periodical variation of the lambda.

17. Method according to any one of the previous claims, comprising repeating the diagnosis on a number of occasions so as determine a number of condition measures, forming a mean of said condition measures, and determining the state of the binary lambda probe based on said mean of said condition measures.

18. Method according to claim 17, wherein state (well-functioning/faulty) of the binary lambda probe (5) is determined by comparing said mean of said condition measures to a threshold value.

19. Method according to any one of the previous claims, wherein a second catalyst (6) is mounted downstream of the first catalyst, the oxidized/deoxidized state thereof being controllable so as to enable conversion of exhaust gases during the diagnosis.

20. Arrangement for diagnosing a secondary lambda probe mounted downstream of a first catalyst in a catalytic converter for a vehicle,
**characterised by,**
means for, when the first catalyst is essentially oxidised or alternatively essentially deoxidised, controlling the lambda (air to fuel ratio) upstream of the first catalyst so as to vary the lambda in accordance with a selected periodical variation, at least partly in the nominal dynamic range of the secondary lambda probe,
means for measuring the response of the secondary lambda probe to said selected periodical variation, and
means for determining a condition measure of the secondary lambda probe using said response.

## Patentansprüche

1. Verfahren für die Diagnose einer sekundären Lambdasonde (5), die stromabseitig von einem ersten Katalysator (4) in einem katalytischen Wandler (1) für eine Maschine angebracht ist,
**dadurch gekennzeichnet, dass**
dann, wenn der erste Katalysator (4) im Wesentlichen oxidiert oder alternativ im Wesentlichen desoxidiert ist,
- das Lambda (Luft/Kraftstoff-Verhältnis) stromaufseitig von dem ersten Katalysator (4) so gesteuert wird, dass das Lambda in Übereinstimmung mit einer ausgewählten periodischen Veränderung wenigstens teilweise in einem dynamischen Nennbereich der sekundären Lambdasonde (5) verändert wird,
- die Antwort der sekundären Lambdasonde (5) auf die ausgewählte periodische Veränderung gemessen wird und
- ein Zustandsmaß der sekundären Lambdasonde (5) unter Verwendung der Antwort bestimmt wird.

2. Verfahren nach Anspruch 1, wobei die sekundäre Lambdasonde (5) eine binäre Lambdasonde ist und das Lambda in Übereinstimmung mit einer ausgewählten periodischen Veränderung wenigstens teilweise in dem dynamischen Nennbereich der binären Lambdasonde verändert wird.

3. Verfahren nach Anspruch 1 oder 2, wobei dann, wenn der erste Katalysator (4) im Wesentlichen desoxidiert ist, die ausgewählte periodische Veränderung von Lambda in der Weise definiert ist, dass für einen Hauptabschnitt der Veränderung Lambda ≤ 1 ist.

4. Verfahren nach Anspruch 3, wobei Lambda in Übereinstimmung mit einer ausgewählten periodischen Veränderung im Bereich von 0,85 bis 1,1, vorzugsweise im Bereich von 0,9 bis 1,01 und am stärksten bevorzugt im Bereich von 0,94 bis 1,005 verändert wird.

5. Verfahren nach Anspruch 1 oder 2, wobei dann, wenn der erste Katalysator (4) im Wesentlichen oxidiert ist, die ausgewählte periodische Veränderung von Lambda in der Weise definiert ist, dass für einen Hauptabschnitt der Veränderungsdauer Lambda ≥ 1 ist.

6. Verfahren nach Anspruch 5, wobei Lambda in Übereinstimmung mit einer ausgewählten periodischen Veränderung im Bereich von 0,9 bis 1,15, vorzugsweise im Bereich von 0,99 bis 1,1 und am stärksten bevorzugt im Bereich von 0,995 bis 1,06 verändert wird.

7. Verfahren nach einem der vorhergehenden Ansprüche, wobei Lambda in Übereinstimmung mit einer ausgewählten periodischen Veränderung, die im Wesentlichen eine Sinuskurve ist, verändert wird.

8. Verfahren nach einem der vorhergehenden Ansprüche, wobei Lambda in Übereinstimmung mit einer ausgewählten periodischen Veränderung, die eine Frequenz im Bereich von 0,1 bis 1 Hz, vorzugsweise im Bereich von 0,25-0,5 Hz und am stärksten bevorzugt mit einem Wert von etwa 0,33 Hz besitzt, verändert wird.

9. Verfahren nach einem der vorhergehenden Ansprüche, wobei die ausgewählte periodische Veränderung von Lambda während einer Zeitdauer, die im Bereich von 3 bis 7 s liegt und vorzugsweise 6-7 s beträgt, ausgeführt wird.

10. Verfahren nach einem der vorhergehenden Ansprüche, wobei die ausgewählte periodische Veränderung von Lambda ausgeführt wird, wenn die Maschine in Leerlauf ist.

11. Verfahren nach einem der vorhergehenden Ansprüche, wobei die ausgewählte periodische Veränderung von Lambda unter normalen Betriebsbedingungen der Maschine ausgeführt wird.

12. Verfahren nach einem der vorhergehenden Ansprüche, das einen Verifikationsschritt umfasst, der vor dem periodischen Verändern des Lambda ausgeführt wird und in dem verifiziert wird, dass der erste Katalysator (4), der sich stromaufseitig von der sekundären Lambdasonde (5) befindet, im Wesentlichen oxidiert oder desoxidiert ist.

13. Verfahren nach Anspruch 12, wobei die Verifikation des oxidierten oder desoxidierten Zustands des ersten Katalysators (4) unter Verwendung der Antwort von der sekundären Lambdasonde (5) vor dem Beginn der periodischen Veränderung von Lambda ausgeführt wird.

14. Verfahren nach einem der vorhergehenden Ansprüche, wobei stromaufseitig von dem ersten Katalysator eine primäre Lambdasonde (3) angeordnet ist.

15. Verfahren nach Anspruch 14, das einen Steuerschritt umfasst, der die Analyse der Antwort von der primären Lambdasonde (3) enthält, um so sicherzustellen, dass sich Lambda stromaufseitig von dem ersten Katalysator (4) periodisch verändert.

16. Verfahren nach einem der vorhergehenden Ansprüche, wobei das Zustandsmaß die Spannungsveränderungen der Antwort der binären Lambdasonde (5) auf die ausgewählte periodische Veränderung von Lambda angibt.

17. Verfahren nach einem der vorhergehenden Ansprüche, das das Wiederholen der Diagnose für eine Anzahl von Gelegenheiten, um so mehrere Zustandsmaße zu bestimmen, das Bilden eines Mittelwerts der Zustandsmaße und das Bestimmen des Zustands der binären Lambdasonde anhand des Mittelwerts der Zustandsmaße umfasst.

18. Verfahren nach Anspruch 17, wobei der Zustand (fehlerfrei/fehlerhaft) der binären Lambdasonde (5) durch Vergleichen des Mittelwerts der Zustandsmaße mit einem Schwellenwert bestimmt wird.

19. Verfahren nach einem der vorhergehenden Ansprüche, wobei stromabseitig von dem ersten Katalysator ein zweiter Katalysator (6) angebracht ist, dessen oxidierter/desoxidierter Zustand in der Weise gesteuert werden kann, dass eine Umwandlung von Abgasen während der Diagnose möglich ist.

20. Anordnung für die Diagnose einer sekundären Lambdasonde, die stromabseitig von einem ersten Katalysator in einem katalytischen Wandler für ein Fahrzeug angebracht ist,
**gekennzeichnet durch**
Mittel, um dann, wenn der erste Katalysator im Wesentlichen oxidiert oder alternativ im Wesentlichen desoxidiert ist, das Lambda (Luft/Kraftstoff-Verhältnis) stromaufseitig von dem ersten Katalysator so zu steuern, dass das Lambda in Übereinstimmung mit einer ausgewählten periodischen Veränderung wenigstens teilweise in dem dynamischen Nennbereich der sekundären Lambdasonde verändert wird,
Mittel, um die Antwort der sekundären Lambdasonde auf die ausgewählte periodische Veränderung zu messen, und
Mittel, um ein Zustandsmaß der sekundären Lambdasonde unter Verwendung der Antwort zu bestimmen.

## Revendications

1. Procédé de diagnostic d'une sonde lambda secondaire (5) montée en aval d'un premier catalyseur (4) dans un convertisseur catalytique (1) pour un moteur, **caractérisé par** les étapes consistant à,
lorsque le premier catalyseur (4) est sensiblement oxydé ou, en variante, sensiblement désoxydé :
- contrôler le coefficient lambda (rapport air/carburant) en amont du premier catalyseur (4) de sorte à faire varier le coefficient lambda suivant une variation périodique sélectionnée, au moins partiellement dans une plage dynamique nominale de la sonde lambda secondaire (5),
- mesurer la réponse de la sonde lambda secondaire (5) à ladite variation périodique sélectionnée,
- déterminer une mesure de condition de la sonde lambda secondaire (5) en utilisant ladite réponse.

2. Procédé selon la revendication 1, dans lequel la sonde lambda secondaire (5) est une sonde lambda binaire, et le coefficient lambda est varié selon une variation périodique sélectionnée, au moins partiellement dans une zone dynamique nominale de la sonde lambda binaire.

3. Procédé selon la revendication 1 ou 2, dans lequel, quand le premier catalyseur (4) est sensiblement désoxydé, la variation périodique sélectionnée du coefficient lambda est définie de telle sorte que, pour une partie principale de la variation, le coefficient lambda est ≤ 1.

4. Procédé selon la revendication 3, dans lequel le coefficient lambda est varié selon une variation périodique sélectionnée dans la plage de 0,85 à 1,1, de préférence dans la plage de 0,9 à 1,01, de manière préférée entre toutes dans la plage de 0,94 à 1,005.

5. Procédé selon la revendication 1 ou 2, dans lequel, quand le premier catalyseur (4) est sensiblement oxydé, la variation périodique sélectionnée du coefficient lambda est définie de telle sorte que, pour une partie principale de la durée de la variation, le coefficient lambda est ≥ 1.

6. Procédé selon la revendication 5, dans lequel le coefficient lambda est varié selon une variation périodique sélectionnée dans la plage de 0,9 à 1,15, de préférence dans la plage de 0,99 à 1,1, de manière préférée entre toutes dans la plage de 0,995 à 1,06.

7. Procédé selon l'une quelconque des revendications précédentes, dans lequel le coefficient lambda est varié selon une variation périodique sélectionnée qui est sensiblement une sinusoïde.

8. Procédé selon l'une quelconque des revendications précédentes, dans lequel le coefficient lambda est varié selon une variation périodique sélectionnée ayant une fréquence de 0,1 à 1 Hz, de préférence de 0,25 à 0,5 Hz, de manière préférée entre toutes d'environ 0,33 Hz.

9. Procédé selon l'une quelconque des revendications précédentes, dans lequel la variation périodique sélectionnée du coefficient lambda est effectuée pendant une durée de 3 à 7 sec., de préférence de 6 à 7 sec.

10. Procédé selon l'une quelconque des revendications précédentes, dans lequel la variation périodique sélectionnée du coefficient lambda est effectuée quand le moteur tourne au ralenti.

11. Procédé selon l'une quelconque des revendications précédentes, dans lequel la variation périodique sélectionnée du coefficient lambda est effectuée sous des conditions de fonctionnement normal du moteur.

12. Procédé selon l'une quelconque des revendications précédentes, comprenant une étape de vérification exécutée avant de faire varier périodiquement le coefficient lambda, dans laquelle il est vérifié que le premier catalyseur (4) situé en amont de la sonde lambda secondaire (5), est sensiblement oxydé ou désoxydé.

13. Procédé selon la revendication 12, dans lequel la vérification de l'état oxydé ou désoxydé du premier catalyseur (4) est exécutée en utilisant la réponse de la sonde lambda secondaire (5) avant de commencer la variation périodique du coefficient lambda.

14. Procédé selon l'une quelconque des revendications précédentes, dans lequel une sonde lambda principale (3) est disposée en amont du premier catalyseur.

15. Procédé selon la revendication 14, comprenant une étape de contrôle analysant la réponse de la sonde lambda principale (3) de sorte à vérifier que le coefficient lambda varie périodiquement en amont du premier catalyseur (4).

16. Procédé selon l'une quelconque des revendications précédentes, dans lequel la mesure de condition est représentative des variations de tension de la réponse de la sonde lambda binaire (5) à la variation périodique sélectionnée du coefficient lambda.

17. Procédé selon l'une quelconque des revendications précédentes, comprenant l'étape consistant à répéter le diagnostic un certain nombre de fois de sorte à déterminer un nombre de mesures de condition, à former une moyenne desdites mesures de condition, et à déterminer l'état de la sonde lambda binaire sur la base de ladite moyenne desdites mesures de condition.

18. Procédé selon la revendication 17, dans lequel l'état (fonctionnement satisfaisant/défaillant) de la sonde lambda binaire (5) est déterminé en comparant ladite moyenne desdites mesures de condition à une valeur seuil.

19. Procédé selon l'une quelconque des revendications précédentes, dans lequel un second catalyseur (6) est monté en aval du premier catalyseur, l'état oxydé/désoxydé de celui-ci pouvant être contrôlé de sorte à permettre la conversion des gaz d'échappement pendant le diagnostic.

20. Agencement conçu pour diagnostiquer une sonde lambda secondaire montée en aval d'un premier catalyseur dans un convertisseur catalytique pour un véhicule,
**caractérisé par**,
des moyens conçus pour, lorsque le premier catalyseur est sensiblement oxydé ou, en variante, sensiblement désoxydé, contrôler le coefficient lambda (rapport air/carburant) en amont du premier catalyseur de sorte à faire varier le coefficient lambda suivant une variation périodique sélectionnée, au moins partiellement dans une plage dynamique nominale de la sonde lambda secondaire,
des moyens de mesure de la réponse de la sonde lambda secondaire à ladite variation périodique sélectionnée, et
des moyens conçus pour déterminer une mesure de condition de la sonde lambda secondaire en utilisant ladite réponse.
